Europäisches Patentamt

**European Patent Office**

**Office européen des brevets**

(19)

(11) Publication number: **0 168 997**
A2

# (12) EUROPEAN PATENT APPLICATION

(21) Application number: **85304593.8**

(22) Date of filing: **27.06.85**

(51) Int. Cl.⁴: **G 06 F 7/50**, G 06 F 7/68

(30) Priority: **18.07.84 GB 8418252**

(43) Date of publication of application: **22.01.86**
**Bulletin 86/4**

(84) Designated Contracting States: **AT BE CH DE FR IT LI LU NL SE**

(71) Applicant: **THE MARCONI COMPANY LIMITED, The Grove Warren Lane, Stanmore Middlesex HA7 4LY (GB)**

(72) Inventor: **Sosin, Boleslaw Marian, "Frampton" Main Road, Boreham Essex (GB)**
Inventor: **Irvine, Robert Grant, 1, Elmside Road Wembley Park, Middlesex, HA9 8JB (GB)**
Inventor: **McCabe, Andrew Peter Henry, 62, Tarrington Drive, South Harrow Middlesex, HA2 8NF (GB)**

(74) Representative: **Hoste, Colin Francis et al, The General Electric Company p.l.c. Central Patent Department (Chelmsford Office) Marconi Research Centre West Hanningfield Road, Great Baddow Chelmsford CM2 8HN, Essex (GB)**

(54) Accumulator arrangement.

(57) An accumulator arrangement is suitable for incorporation in a frequency synthesiser to generate a lower frequency from a stable high frequency reference source. It utilises an array of single bit adders, the outputs of which are assembled in separate sum and carry registers. This enables a final carry output to be generated very rapidly. Additional stages can also be added to give a more conventional sum output, but at a correspondingly delayed rate.

PATENT SPECIFICATION

ACCUMULATOR ARRANGEMENT

This invention relates to an accumulator arrangement of the kind which performs successive mathematical additions. Electrical circuits suitable for performing this function are readily available, but are of fairly slow operation compared to the speed capability of its component parts, or are of limited accuracy. Accumulators can be used in frequency synthesiser circuits, in which the accumulator is in effect used to achieve precise frequency division of a reference frequency to produce a required lower frequency value. The divided frequency is constituted by the rate at which the accumulator generates output pulses, usually carry pulses, and hence the maximum output frequency is dependent on the speed of operation of the accumulator.

The present invention seeks to provide an improved accumulator arrangement.

According to a first aspect of this invention an accumulator arranged to produce cumulative summations of a multi-bit digital number includes means for performing each addition as a plurality of single bit additions, with the partial sum and carry results thereof being assembled separately in respective partial sum and carry registers.

According to a second aspect of this invention an accumulator arrangement includes a partial sum register having a predetermined plurality of stages for holding the running partial sum of successive additions of a digital number; a said plurality of single bit adders for adding respective bits of the digital number to the current partial sum and a carry value to produce a new running partial sum and a running carry value; the new running partial sum being entered into said sum register, and the running carry value being entered into a respective stage of a multi-stage carry register; and means for utilising the most significant bit of the carry register as an output signal. Preferably the stages of the carry register are coupled to respective inputs of the single bit adders so as to be combined in a single step with the respective next more significant bit of the digital number and the partial sum.

The value of said digital number will, in general, not be constant but will be changed from time to time. Operation of the single-bit adders is controlled by a clock signal, an addition at all adders taking place simultaneously on the occurrence of a clock pulse. Preferably when said value is to be altered, the new value replaces the existing value on a bit by bit basis, starting with the least significant bit such that a successively more significant bit is altered on the occurrence of each clock pulse. This avoids discontinuities in the correct formation of the partial sum and carry values during the changeover period.

The invention usefully constitutes the frequency divider in a frequency synthesiser in which a stable reference frequency having an accurately known value is divided, either by an integer value or a fractional value to produce a lower frequency having an equally accurate value and stability. By altering the division ratio the output frequency can be accurately adjusted over a wide frequency band using just a single reference frequency.

In the context of the present invention, the clock signal represents the reference frequency, the digital number is related to the change of phase occurring at each clock pulse, and the rate at which the most significant bits of the carry register are generated represents the required frequency output. The accumulator of the invention has the advantage that the relationship between the input clock frequency and the resulting output frequency value is not fixed, but instead it can be varied quickly so as to thereby impose frequency modulation on a synthesised output frequency signal.

0168997

- 3 -

The invention is not limited to this purpose, as it is capable, in an extended form, of operating as a rapid acting general purpose accumulator.

The invention is further described by way of example with reference to the accompanying drawings in which:

Figure 1 shows a frequency synthesiser including an idealised accumulator arrangement.

Figure 2 shows an accumulator arrangement in accordance with the invention.

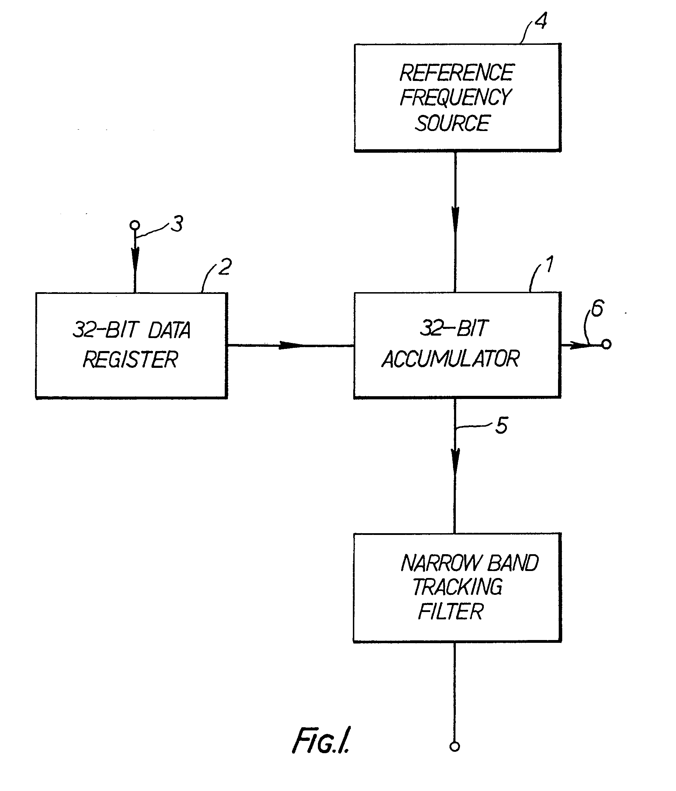

Referring to Figure 1, the frequency synthesiser includes an idealised accumulator arrangement consisting of a conventional 32-bit accumulator 1 and a 32-bit data register 22. Data in the form of a 32-bit binary value is entered over line 3 into the data register 2, and on each occurrence of a clock pulse represented by a cycle of a reference frequency source 4 this digital value is entered into the accumulator 1 where it is summed with the previous contents of the accumulator. Thus, by way of example, after five clock pulses the contents of the accumulator will be equivalent to five times the value of the digital value, and when the accumulative sum exceeds the capacity of the accumulator, an overflow, or carry pulse, is made available on output line 5, and the most significant eight bits of the accumulated sum are made available over line 6. The stream of carry pulses represents the required output frequency, which is fed via a 'clean-up' filter, which takes the form of a narrow band tracking filter 7. In principle, the data input line 3 may be a single lead over which information is entered in a serial format but the data is transferred from the register 2 to the accumulator 1 via 32 parallel lines, and the output line 6 consists of 8 parallel leads. The disadvantage with the conventional straightforward implementation of such an accumulator arrangement is that it is very slow operating in that the nature of the calculations performed on the occurrence of each clock pulse are relatively complex, as it is necessary to transfer a carry pulse associated with each of the thirty two bits of the digital value before a final sum can be determined.

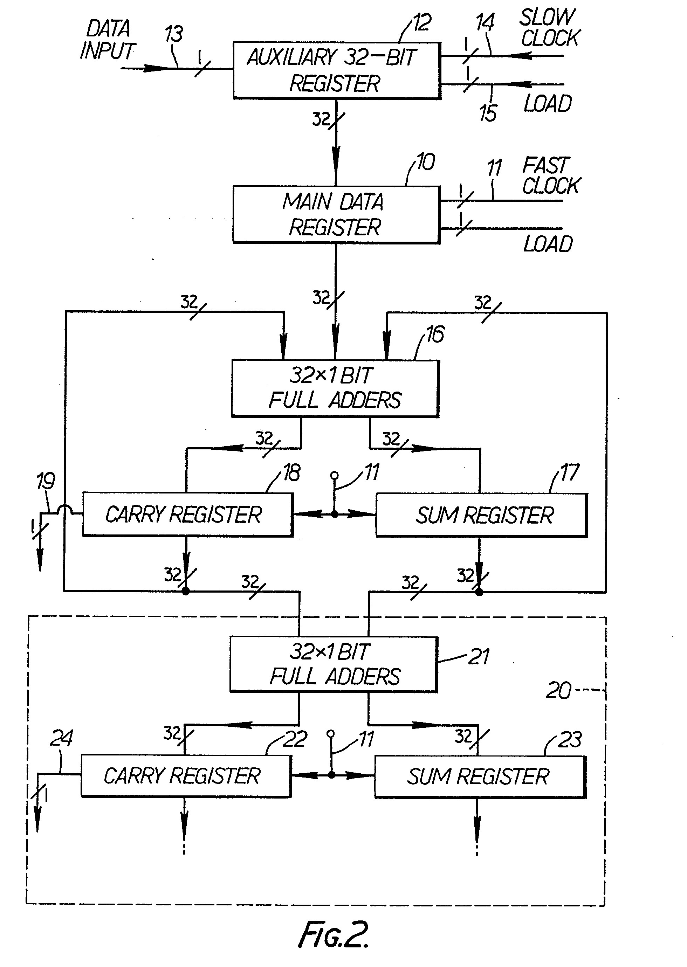

Referring to Figure 2 there is shown therein in diagramatic form an accumulator arrangement which is capable of inherently faster operation. A main register 10 corresponds generally to the data register 2 shown in Figure 1 and its function is to hold the digital word which is to be cumulatively summed on the occurrence of fast clock pulses applied over lead 11 and obtained from a very stable and accurate reference frequency source. As these clock pulses occur at very high frequency, typically of the order of 500 MHz, it is inconvenient to have data fed so rapidly to the accumulator as a whole. Accordingly, an auxiliary data register 12 is provided to which the data is input at a relatively low serial rate via a single line 13. The write rate is determined by the action of a slow clock signal via line 14, and the new data is entered at this slow rate under the control of a load signal on line 15.

Data held in the auxiliary data register is transferred via thirty two parallel lines to the corresponding stages of the main data register, although new data is entered into the main register in a serially timed fashion with the least significant bit being entered first, and the most significant bit (the 32nd bit) being entered last. As will be described subsequently, this enables the accumulator operation to transfer smoothly when the value of the data input alters.

Each of the thirty two data stages of the main register 10 are individually connected to a respective one of thirty two 1-bit full adders 16. Each of these 1-bit full adders possesses a sum output and a carry output. The sum output is directed to a respective stage of a thirty two bit sum register 17 and the carry bit is directed to a similar stage of a carry register 18. The outputs of the sum register and carry register are routed back to a respective input of the thirty two 1-bit adders 16, but in the case of the carry bits, bit numbers 1 to 31 are shifted left before being applied to the adders 16, and the vacant least significant bit is set to zero. The most significant bit of the carry register, that is to say the thirty second bit, is output to an output line 19 where it can be utilised as necessary.

For many applications this most significant bit of the carry register, which represents an overflow pulse, is sufficient in itself. This is so if the accumulator forms part of the frequency synthesiser shown in Figure 1.

It will be appreciated that by altering the value of the data input on line 13 the rate at which overflow pulses on line 19 are produced can be varied, and in the context of a frequency synthesiser this will produce a different output frequency when the data value is altered, or a corresponding frequency modulation of the output signal if the data changes continuously. Suitable changes in the data can also readily be arranged to produce phase or data modulation, and abrupt changes can result in an output signal useful in a phase or frequency shift keying system.

In the configuration shown in Figure 2, abrupt changes of the data input value could produce discontinuities in the operation of the full adders which take some little time to settle as the effect of changing a particular bit is passed to the carry output with a delay which is dependent on the bit position. This settling time may be acceptable if only a few number of discrete frequency values are needed but it is clearly not acceptable if the variation of the data level input values represent frequency modulation itself as the changes in data values will occur very rapidly.

As mentioned, the data is entered into the auxiliary register 12 and transferred into the main register 10 for utilisation. When it is desired to change the data value, a new digital word is entered into the auxiliary register 12 in serial fashion over line 13. Then instead of entering the whole of the 32 bits into the main register 10 on the occurrence of the next fast clock pulse, it is entered in one bit at a time starting with the least significant bit. Thus each of the existing contents of the stages of the main data register are replaced one at a time by the new data until the whole value is present in the main register. This gives a single abrupt transition at the carry output, as the effect of changing all the bits occurs at the same time due to the selective delay applied to each bit.

For some applications a knowledge of the final sum value may be required. It will be recalled that so far only the overflow signal has been produced and this is representative of a most significant bit ( m.s.b.) In order to obtain additional bits of the sum in order of decreasing significance, a cascaded sequence of additional stages 20 is required. Each stage consists of 32 full 1-bit adders 21, similar to adders 16, and a carry register 22 and a sum register 23. The next most significant bit is obtained at the output 24 of the first additional stage, and as many stages are provided as significant bits are required in the output value. The additional stages do not each necessarily require thirty-two full 1-bit adders and 32-bit registers, as for some applications only a fewer number of selected bits may be needed to form an output sum value. Because of the inherent delay of one clock period in the operation of each additional stage, the outputs of the preceding stages, including that on lead 19, should be delayed by the appropriate number of clock periods, by means of a delay line, or bistable, or the like, so that all of the significant bits are made available at the same time. In this mode, the accumulator operates to give a conventional sum output value, with the possibility of being able to trade off throughout speed (overall delay) against the degree of accuracy required.

Claims

1.    An accumulator arranged to produce cumulative summations of  a multi-bit digital number including means for performing each addition as a plurality of single bit additions, with the partial sum and carry results thereof being assembled separately in respective partial sum and carry registers.

2.    An accumulator arrangement including a partial sum register having  a predetermined plurality of stages for holding the running partial sum of successive additions of a digital number; a said plurality of single bit adders for adding respective bits of the digital number to the current partial sum and a carry value to produce a new running partial sum and a running carry value; the new running partial sum being entered into said sum register, and the running carry value being entered into a respective stage of a multi-stage carry register; and means for utilising the most significant bit of the carry register as an output signal.

3.    An arrangement as claimed in claim 2 and wherein the stages of the carry register are coupled to respective inputs of the single bit adders so as to be combined in a single step with the respective next more significant bit of the digital number and the partial sum.

4.    An arrangement as claimed in claim 2 and wherein means are provided for altering the value of the digital number on a bit by bit basis, starting with the least significant bit such that a successively more significant bit is altered on the occurrence of each clock pulse.

5.    An arrangement as claimed in claim 2 and wherein the contents of the carry register and the partial sum register are fed to a further plurality of single bit full adders where respective sum elements are added to corresponding carry elements to produce further carry values and partial sum values in respective registers, with the most significant bit of the further carry value being used as an output signal.

6.   An arrangement as claimed in claim 5 and wherein a cascade of further stages, each having a said further plurality of single bit full adders, and respective partial sum and carry registers, are provided, with each stage in the sequence contributing a progressively less significant bit to a final sum value.

7.   A frequency synthesiser incorporating an accumulator arrangement as claimed in any of the preceding claims in which the accumulator is operative to produce from a reference frequency source a lower output frequency having a controlled value.

Fig.1.

Fig.2.